Europäisches Patentamt

European Patent Office

Office européen des brevets

(19)

(11) Numéro de publication : **0 214 052 B1**

(12)

# FASCICULE DE BREVET EUROPEEN

(45) Date de publication du fascicule du brevet :
**15.05.91 Bulletin 91/20**

(51) Int. Cl.⁵ : **G11B 5/48, G11B 5/55**

(21) Numéro de dépôt : **86401880.9**

(22) Date de dépôt : **26.08.86**

(54) Agencement de têtes magnétiques d'enregistrement et/ou de lecture pour mémoires à disques.

(30) Priorité : 26.08.85 FR 8512719

(43) Date de publication de la demande :
11.03.87 Bulletin 87/11

(45) Mention de la délivrance du brevet :
15.05.91 Bulletin 91/20

(84) Etats contractants désignés :
**BE DE GB IT**

(56) Documents cités :
**PATENTS ABSTRACTS OF JAPAN, vol. 4, no.
153 (P-33)[635], 25 octobre 1980; & JP-A-55 101
165 (NIPPON DENKI K.K.) 01-08-1980
PATENTS ABSTRACTS OF JAPAN, vol. 3, no.
34 (E-99), 22 mars 1979, page 94 E 99; &
JP-A-54 12 712 (NIPPON DENKI K.K.) 30-
01-1979
IBM TECHNICAL DISCLOSURE BULLETIN,
vol. 26, no. 10A, mars 1984, pages 4996,4997,
New York, US; D.W. JONES et al.: "Linear
actuation with rotary support"
PATENTS ABSTRACTS OF JAPAN, vol. 9, no.
207 (P-382)[1930], 24 août 1985; & JP-A-60 69
867 (SHARP K.K.) 20-04-1985**

(56) Documents cités :
**PATENTS ABSTRACTS OF JAPAN, vol. 4, no.
131 (P-27)[613], 13 septembre 1980; & JP-A-55
84 028 (FUJITSU K.K.) 24-06-1980
PATENTS ABSTRACTS OF JAPAN, vol. 4, no.
27 (P-1)[509], 7 mars 1980; & JP-A-55 1620
(FUJITSU K.K.) 08-01-1980
PATENTS ABSTRACTS OF JAPAN, vol. 8, no.
278 (P-322)[1715], 19 décembre 1984; & JP-
A-59 144 023 (SUWA SEIKOSHA K.K.) 17-
08-1984**

(73) Titulaire : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Rohart, Patrick
4, rue de Sully
F-78110 Le Vesinet (FR)**
Inventeur : **Garcia, Salvador
31, rue du Pardon
F-95100 Argenteuil (FR)**

(74) Mandataire : **Picard, Jean-Claude Georges et
al
Cabinet Plasseraud 84, rue d'Amsterdam
F-75009 Paris (FR)**

EP 0 214 052 B1

## Description

La présente invention concerne un agencement de têtes magnétiques d'enregistrement et/ou de lecture pour mémoires à disques, ces disques comportant sur leurs faces un certain nombre de zones magnétiques concentriques constituées chacune par un nombre déterminé de pistes circulaires, les têtes étant radialement décalées mais chacune ayant un débattement radial limité correspondant à la largeur d'une seule zone magnétique et étant montées sur des patins portés par un seul et même support, lequel peut être mu par un moteur électrodynamique ou analogue, de façon à pouvoir se déplacer radialement par rapport aux disques, à très faible distance de la face intéressée de ceux-ci.

Un bras porte-têtes relié par deux axes parallèles (15, 19) respectivement, d'une part à un premier bras (11) articulé sur une pièce fixe (16), et d'autre part à un deuxième bras (17) également articulé sur ladite pièce fixe (16), lesdits axes (15, 19) d'articulation du bras porte-têtes et (12, 18) d'articulation de ladite pièce fixe (16) étant parallèles à l'axe de rotation (2) des disques (1) et constituant un parallélogramme articulé, les deux premiers axes cités (15, 19) étant situés dans un plan pratiquement radial par rapport aux disques (1), les bras étant dirigés transversalement à cette dernière direction.

Cette disposition générale connue des têtes par rapport aux zones magnétiques permet de diminuer considérablement le temps d'accès à une piste, puisque celui-ci sera toujours inférieur ou égal au temps mis par un patin pour parcourir la distance radiale correspondant à une largeur de zone magnétique.

On connaît déjà une telle liaison mécanique à parallélogramme articulé par le document JP-A-55-84028, mais les têtes sont portées par un bras radial apte à être déplacé radialement par l'action directe du moteur. Il n'y a dans cette liaison aucun équilibrage de la masse mobile du moteur et de la masse du bras et des têtes, de sorte que ce système est très sensible aux chocs et aux vibrations s'exerçant en direction radiale.

Le but de la présente invention est de remédier à cet inconvénient, et à cet effet un agencement du type général défini au début est caractérisée en ce que ledit premier bras comporte, à l'opposé de son axe d'articulation sur ledit bras porte-têtes, un prolongement s'étendant au-delà de son axe d'articulation sur ladite pièce fixe, consituant ainsi un levier principal à deux bras, l'extrémité de ce prolongement étant connectée à l'organe mobile dudit moteur de sorte à pouvoir être sollicitée dans une direction parallèle audit plan pratiquement radial.

Ainsi, on obtient, comme souhaité, lors de l'actionnement dudit moteur électrodynamique, un déplacement pratiquement radial des têtes magnétiques, avec une compensation satisfaisante vis à vis des chocs et des vibrations, ceci grâce à un équilibrage des masses mobiles par rapport à l'axe de rotation entre ledit bras principal et ladite pièce fixe.

D'autres caractéristiques plus particulières de cette disposition seront également mieux vues à la lecture de l'exemple nullement limitatif de réalisation de l'invention, qui va maintenant être décrit avec référence aux figures du dessin annexé dans lequel :

    – la figure 1 est une vue en plan schématique d'un agencement de têtes magnétiques conforme à la présente invention ;

    – la figure 2 est une vue partielle en plan plus détaillée montrant plus clairement le positionnement relatif des deux positions extrêmes des têtes d'un patin par rapport aux zones magnétiques du disque ;

    – la figure 3 est une vue de profil des deux positions extrêmes du patin de la figure 2 ;

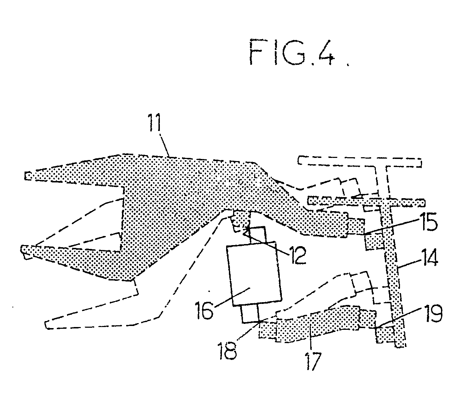

    – la figure 4 est une vue en plan partielle du positionneur, montrant ses deux positions extrêmes ; et

    – la figure 5 est une vue en perspective montrant une réalisation possible des axes du parallélogramme articulé.

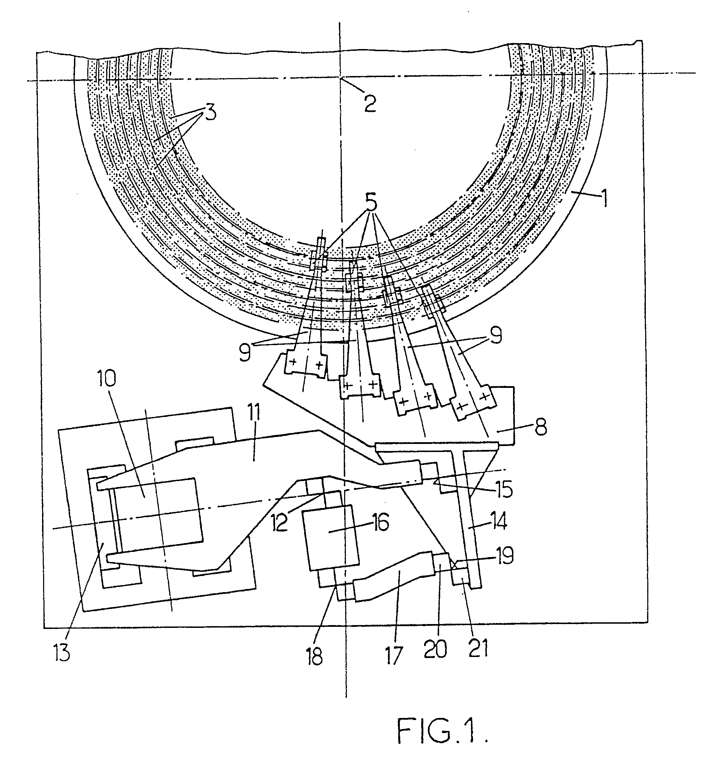

Sur la figure 1, on a référencé 1 un disque magnétique, à axe de rotation 2, et qui en réalité pourra être constitué d'un empilage de tels disques, chacun ayant deux faces magnétiques.

Chacune des faces comporte un certain nombre de zones magnétiques concentriques 3, lesquelles, dans l'exemple représenté, sont au nombre de huit et sont elles mêmes constituées d'un certain nombre de pistes magnétiques circulaires, au nombre de par exemple 60 par zone. Ces pistes peuvent être lues (ou enregistrées) par un ensemble de têtes magnétiques 4, à chaque tête étant affectée une zone magnétique 3 déterminée. Ces têtes sont portées par des patins 5, lesquels peuvent parvenir à une configuration de vol stable à très faible distance de la surface du disque lorsque celui-ci tourne à vitesse élevée (de l'ordre de 3 600 t/mn) le patin étant spécialement configuré à cet effet, et ceci de façon connue en soi.

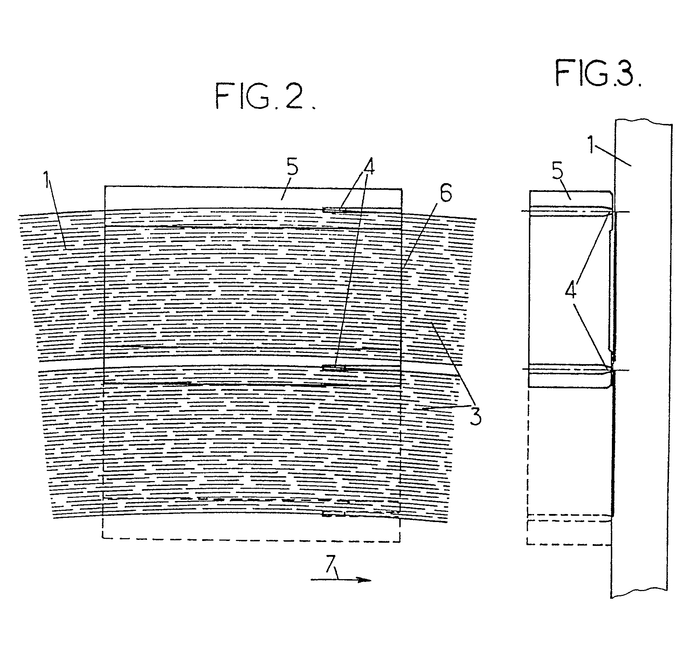

Comme mieux visible sur la figure 2, les têtes magnétiques 4 sont disposées à proximité du "bord de fuite" 6 des patins 5, le disque tournant dans le sens de la flèche 7.

Le patin 5 representé (comme chacun des trois autres patins 5, lesquels ne sont pas visibles sur cette figure) porte deux têtes magnétiques 4 radialement espacées de telle sorte que lorsque l'une d'elles se situe à proximité du bord périphérique extérieur d'une des zones 3, l'autre se situe à proximité du bord périphérique extérieur de la zone 3 voisine. En d'autres termes, chaque patin 5, portant deux têtes magnétiques 4, intéresse deux zones magnétiques voisines 3 du disque 1 ; comme indiqué plus haut, chaque tête 4 est affectée à une seule zone 3. A aucun moment une tête ne peut explorer une piste à laquelle elle n'a pas été affectée, ce qui conduit à une optimisation de l'exploitation des surfaces magnétiques du disque.

Dès lors, on voit que grâce à cette disposition il suffira de déplacer radialement un patin 5 pour avoir rapidement accès, par l'une ou par l'autre des têtes 4, à l'ensemble des informations portées par les deux zones magnétiques voisines 3.

Pour ce faire, le patin 5 n'aura à se déplacer radialement que sur une distance maximale correspondant à la largeur d'une seule zone 3. On voit de quelle façon très simple l'invention permet de raccourcir le temps d'accès $t_1$ aux pistes intéressées des zones 3.

Un aspect essentiel de la présente invention concerne, comme indiqué plus haut, le positionneur, à savoir l'ensemble des moyens électriques et mécaniques qui permettront d'amener une tête déterminée sur la piste qu'elle doit lire, et ceci, par exemple, par un mouvement d'ensemble des patins 5, lesquels, dans un but de simplification, peuvent être portés par le même support.

Ce support a été référencé en 8 sur la figure 1.

Les quatre patins 5 sont reliés à ce support 8 par des ressorts porte-patins 9.

Le moteur électrodynamique a été référencé en 10. Par un bras principal 11 articulé à une partie fixe 16 autour d'un axe 12 parallèle à l'axe 2, l'organe mobile de ce moteur, à savoir la bobine 10 (située dans le champ magnétique d'un aimant permanent 13), est reliée à un bras porte-têtes 14 auquel est fixé le support précité 8. La liaison entre le bras principal 11 et le bras porte-têtes 14 est réalisée par l'intermédiaire d'un axe 15 parallèle à l'axe 12. Un bras secondaire 17 relie par ailleurs la partie fixe 16 au bras 14 par l'intermédiaire de deux autres axes 18 et 19 parallèles aux axes 12 et 15 et formant avec ceux-ci un parallélogramme articulé 11-16-17-14.

Ainsi, on conçoit que grâce à cette disposition on pourra obtenir un déplacement pratiquement radial du bras 14 et donc des patins 5 lors du pivotement du bras principal 11 autour de l'axe 12, lorsque le moteur 10 est excité, et ceci avec d'excellentes possibilités de compensation du système vis à vis des vibrations et des chocs, grâce à l'équilibrage des masses mobiles ainsi réalisé par rapport à l'axe 12.

Etant donné les très faibles débattements angulaires du bras principal 11, de l'ordre de 2,5°, il n'est pas possible d'utiliser des roulements à billes ou analogues au niveau des axis 12-15-18-19 du parallélogramme déformable, car ces roulements ne seraient pas suffisamment lubrifiants et risqueraient rapidement de de détériorer.

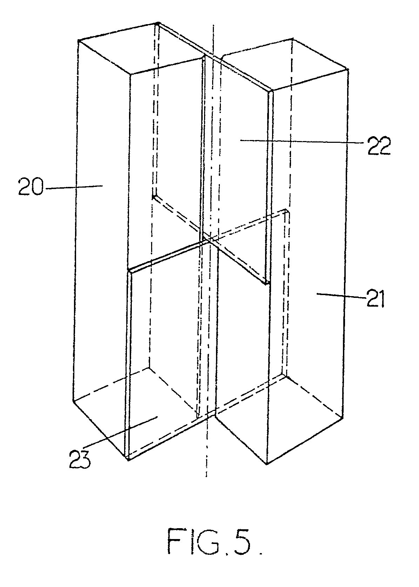

C'est pourquoi on utilisera de préférence des articulations à lames flexibles telles que celle qui est représentée à titre d'exemple sur la figure 5.

Etant donné deux pièces de support rigides 20 et 21 Fixées sur les organes à relier, (voir également figure 1), on les relie par deux lames flexibles 22 et 23 se situant au repos dans deux plans orthogonaux dont l'intersection se trouve être l'axe de la rotation d'un support rigide 20 ou 21 par rapport à l'autre, lorsque les lames fléchissent. On obtient ainsi une excellente articulation, qui au surplus est à rappel élastique automatique dans sa position neutre, et qui présente un minimum de frottements et aucun risque de grippage. En outre, ce type d'articulation présente une grande rigidité vis-à-vis d'efforts autres que le couple de rotation, et aucun jeu.

## Revendications

1. Agencement de têtes magnétiques d'enregistrement et/ou de lecture pour mémoires à disques (1), ces disques comportant sur leurs faces un certain nombre de zones magnétiques concentriques (3) constituées chacune par un nombre déterminé de pistes circulaires, les têtes (4) étant radialement décalées mais chacune ayant un débattement radial limité correspondant à la largeur d'une seule zone magnétique et étant montées sur des patins (5) portés par un seul et même support (8), lequel peut être mu par un moteur électrodynamique ou analogue (10), de façon à pouvoir se déplacer radialement par rapport aux disques, à très faible distance de la face intéressée de ceux-ci, un bras porte-têtes relié par deux axes parallèles (15, 19) respectivement, d'une part à un premier bras (11) articulé sur une pièce fixe (16), et d'autre part à un deuxième bras (17) également articulé sur ladite pièce fixe (16), lesdites axes (15, 19) d'articulation du bras porte-têtes et (12, 18) d'articulation de ladite pièce fixe (16) étant parallèles à l'axe de rotation (2) des disques (1) et constituant un parallélogramme articulé, les deux premiers axes cités (15, 19) étant situés dans un plan pratiquement radial par rapport aux disques (1), les bras étant dirigés transversalement à cette dernière direction, caractérisée en ce que ledit premier bras (11) comporte, à l'opposé de son axe d'articulation (15) sur ledit bras porte-têtes (14), un prolongement s'étendant au-delà de son axe d'articulation (12) sur ladite pièce fixe (16), constituant ainsi un levier principal à deux bras, l'extrémité de ce prolongement étant connectée à l'organe mobile (10) dudit moteur de sorte à pouvoir être sollicitée dans une direction parallèle audit plan pratiquement radial.

2. Agencement selon la revendication 1, caractérisé en ce que lesdits axes (12, 18, 15, 19) sont du type à lames flexibles croisées (22, 23).

3. Agencement selon la revendication 1 ou 2, caractérisé en ce que chaque patin (5) porte deux têtes magnétiques (4) qui sont affectées à deux zones magnétiques (3) successives de la face intéressée du disque (1).

## Ansprüche

1. Vorrichtung für magnetische Schreib- und/oder Leseköpfe für Plattenspeicher (1), wobei die Plattenspeicher auf ihrer Oberseite eine bestimmte Zahl von konzentrischen, magnetischen Zonen (3) aufweisen und jede eine bestimmte Zahl von kreisförmigen Spuren trägt, wobei die Köpfe (4) radial verschoben sind und jeder Kopf einen radial begrenzten Ausschlag entsprechend der Breite einer magnetischen Zone hat und die auf den Kufen (5) angeordnet sind, die von ein und demselben Träger (8) getragen werden, welcher gegebenenfalls von einem elektrodynamischen oder analogen Motor (10) in der Weise bewegt wird, daß er sich radial in bezug auf die Platten mit einem sehr geringfügigen Abstand zu der interessierenden Oberseite derselben verschieben kann, wobei ein Kopf-Trägerarm (14) über zwei parallele Achsen (15, 19) jeweils mit einem Teil an einem ersten schwenkbaren Arm (11) mit einem starren Stück (16) und mit einem anderen Teil an einem zweiten, ebenfalls schwenkbaren Arm (17) mit dem starren Stück (16) verbunden wird, wobei die Gelenkachsen (15, 19) des Kopf-Trägerarmes und die Gelenkachsen (12, 18) des starren Stückes (16) parallel zur Rotationsachse (2) der Plattenspeicher (1) verlaufen und ein schwenkbares Parallelogramm darstellen, wobei die Achsen (15, 19) im wesentlichen in einer radialen Ebene bezogen auf die Plattenspeicher (1) gelegen sind und wobei die Arme quer zu dieser Richtung angeordnet sind, dadurch gekennzeichnet, daß der erste Arm (11) gegenüber seiner Gelenkachse (15) auf dem Kopf-Trägerarm (14) ein Verlängerungsstück trägt, welches sich von seiner Gelenkachse (12) über das feste Stück (16) hinausstreckt und welches aus einem Haupthebel mit zwei Armen besteht, wobei die äußeren Enden dieses Verlängerungsstückes mit einem beweglichen Organ (10) verbunden sind, dem Motor, um nämlich in einer parallelen Richtung zur im wesentlichen radialen Ebene beansprucht werden zu können.

2. Anordnung nach Anspruch 1, dadurch gekennzeichnet, daß die Achsen (12, 18, 15, 19) aus gekreuzten, dünnen, biegsamen Scheiben (22, 23) bestehen.

3. Anordnung nach Anspruch 1 oder 2, dadurch gekennzeichnet, daß jede Kufe (5) zwei Magnetköpfe (4) trägt, die für zwei, auf der interessierenden Oberseite der Platte (1) aufeinanderfolgende Magnetzonen (3) benutzt werden.

## Claims

1. An arrangement of magnetic recording and/or reading heads for disc type memories (1), the discs having on their surfaces a number of concentric magnetic zones (3) each in the form of a predetermined number of circular tracks, the heads (4) being offset radially but each having provision for limited radial movement corresponding to the width of a single magnetic zone and being disposed on shoes or runners or the like (5) carried on a single support (8) so drivable by an electrodynamic motor (10) or the like as to be movable radially relatively to the discs at a very reduced distance from the corresponding surface thereof, a head carrier arm being respectively connected by two parallel pivots (15, 19) to a first arm (11) pivotally connected to a stationary member (16) and to a second arm (17) also pivotally connected thereto, the pivots (15, 19) for the pivotal connection of the head carrier arm and the pivots (12, 18) for the pivotal connection of the stationary member (16) being parallel to the rotational axis (2) of the discs (1) and embodying a link parallelogram, the first-mentioned two pivots (15, 19) being disposed in a substantially radial plane relative to the discs (1), the arms extending transversely to the latter direction, characterised in that the first arm (11) has at the end remote from its pivoted connection (15) to the head carrier arm (14) a prolongation extending beyond its pivoted connection (12) to the stationary member (16) and thus forms a main double-armed lever, the end of the prolongation being so connected to the moving member (10) of the motor as to be adapted to be urged in a direction parallel to the said substantially radial plane.

2. An arrangement according to claim 1, characterised in that the pivots (12, 18, 15, 19) are of the flexible crossed-strip kind (22, 23).

3. An arrangement according to claim 1 or 2, characterised in that each shoe or runner or the like (5) carries two magnetic heads associated with two consecutive magnetic zones (3) of the particular disc surface concerned.

FIG.1.

FIG.2.

FIG.3.

# FIG.4.

FIG.5.